# EUROPÄISCHE PATENTSCHRIFT

(11) **EP 1 414 681 B1**
(45) Veröffentlichungstag und Bekanntmachung des Hinweises auf die Patenterteilung: **27.07.2005**
(21) Anmeldenummer: 02743104.8
(22) Anmeldetag: 25.05.2002
(51) Int. Cl.: B60R 22/34

(54) **SICHERHEITSGURTAUFROLLER MIT EINER IN ABHÄNGIGKEIT VOM GURTBANDAUSZUG SCHALTBAREN KRAFTBEGRENZUNGSEINRICHTUNG**
SAFETY BELT WINDER COMPRISING A POWER LIMITATION SYSTEM WHICH CAN BE ACTUATED ACCORDING TO THE STRIP OF BELT PULLED OUT
ENROULEUR DE CEINTURE DE SECURITE MUNI D'UN SYSTEME DE LIMITATION DE FORCE ACTIONNABLE EN FONCTION DE LA SECTION DE SANGLE SORTIE

(30) Priorität: 31.05.2001 DE 20109114 U
(43) Veröffentlichungstag der Anmeldung: 06.05.2004
(73) Patentinhaber: AUTOLIV DEVELOPMENT AB, 447 83 Vargarda (SE)
(72) Erfinder: CLUTE, Günter, 25336 Elmshorn (DE)
(74) Vertreter: Müller, Karl-Ernst, Dr., Dipl.-Ing.
(86) Internationale Anmeldenummer: PCT/EP2002/005765
(87) Internationale Veröffentlichungsnummer: WO 2002/096724

(56) Entgegenhaltungen:
- EP-A- 1 008 499
- DE-A- 2 727 470
- DE-C- 19 780 583
- DE-U- 29 820 086
- KOCK H-O: "GEGENWAERTIGER STAND UND TRENDS BEI GURTSYSTEMEN" ATZ AUTOMOBILTECHNISCHE ZEITSCHRIFT, FRANCKH'SCHE VERLAGSHANDLUNG. STUTTGART, DE, Bd. 101, Nr. 10, Oktober 1999 (1999-10), Seiten 780-782,784-785, XP000852490 ISSN: 0001-2785

## Beschreibung

Die Erfindung betrifft einen Sicherheitsgurtaufroller mit einer in einem Gehäuse gelagerten Gurtwelle als Träger eines darauf aufwickelbaren und davon abwickelbaren Gurtbandes, wobei der Gurtaufroller eine mehrstufig arbeitende Kraftbegrenzungseinrichtung mit einem Torsionsstab und einer den Torsionsstab in unterschiedlicher Einspannlänge mit der Gurtwelle kuppelnden Schaltvorrichtung aufweist und wobei das Maß des von der Gurtwelle abgewickelten Gurtbandes für die Schaltung der Kraftbegrenzungseinrichtung herangezogen ist.

Ein Sicherheitsgurtaufroller mit den vorgenannten Merkmalen ist aus der DE 27 27 470 A1 bekannt. Der bekannte Sicherheitsgurtaufroller weist einen Torsionsstab als Kraftbegrenzungseinrichtung auf, der an seinem einen Ende drehfest an die Wellenverriegelung angeschlossen und an seinem anderen Ende an die Gurtwelle gekoppelt ist derart, daß auch bei ausgelöster Wellenverriegelung sich die Gurtwelle unter Verdrillung des Torsionsstabes noch um einen gewissen Betrag weiterdrehen kann. Da die Einstellung des Kraftbegrenzungsniveaus in Abhängigkeit insbesondere von der Größe eines Fahrzeuginsassen erfolgen soll, weist der bekannte Gurtaufroller eine Vorrichtung zur kontinuierlichen Veränderung der Einspannlänge des Torsionsstabes auf, die in einer Ausführungsform des vorbekannten Gurtaufrollers in Abhängigkeit von der Länge des ausgezogenen Gurtbandes steuerbar sein soll, indem eine die Einspannlänge festlegende Schiebehülse über ein Getriebe mit der Gurtwelle verbunden ist.

Mit dem bekannten Sicherheitsgurtaufroller ist der Nachteil verbunden, daß die Schiebehülse keine ausreichende Sicherheit für die Festlegung der Einspannlänge des Torsionsstabes darstellt, und im übrigen die Mechanik für eine kontinuierliche Anpassung der Einspannlänge des Torsionsstabes an die Umdrehungszahl der Gurtwelle und damit an den jeweils herrschenden Gurtbandauszug aufwendig ist.

Die DE 197 80 583 C zeigt einen Sicherheitsgurtaufroller mit einem Torsionsstab, dessen wirksame Länge und Dicke durch pyrotechnisch arbeitende Schaltvorrichtungen veränderbar sind.

Der Erfindung liegt daher die Aufgabe zugrunde, einen Sicherheitsgurtaufroller mit den gattungsgemäßen Merkmalen bei hoher Betriebssicherheit in seinem Aufbau zu vereinfachen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht im einzelnen vor, daß ein zweistufiger Torsionsstab mit einer pyrotechnisch arbeitenden Schaltvorrichtung vorgesehen und ein über ein Untersetzungsgetriebe an die Gurtwelle angeschlossenes Schaltrad angeordnet ist, wobei das Schaltrad über einen Teil seines Umfangs eine Verzahnung zum Eingriff des Untersetzungsgetriebes und über einen weiteren Teil seines Umfangs eine gegen einen Schaltstift eines an die Schaltvorrichtung für den Torsionsstab angeschlossenen Elektroschalters anliegende Schaltkontur aufweist und die Schaltkontur mit einem die Zuschaltung oder Abschaltung der Schaltvorrichtung für den Torsionsstab bewirkenden Verlauf ausgebildet ist.

Zunächst ist die Erfindung in vorteilhafter Weise dadurch geprägt, daß lediglich ein zweistufiger Torsionsstab als Kraftbegrenzungseinrichtung vorgeschlagen ist, weil damit den unterschiedlichen Körpergrößen bei großen Insassen bzw. bei kleinen Frauen, Jugendlichen und Kindern in dem jeweils festgelegten Ansprechbereich ausreichend Rechnung zu tragen ist. Mit der Reduktion auf einen zweistufigen Torsionsstab ist auch eine an sich bekannte pyrotechnische Schaltvorrichtung für die beiden geltenden Einspannlängen des Torsionsstabes einsetzbar, mittels derer in einer sehr betriebssicheren Weise die jeweilige Einspannlänge des Torsionsstabes festzulegen ist, wobei die pyrotechnische Schaltvorrichtung bei einem sensierten Unfall je nach dem Maß des von der Gurtwelle abgewickelten Gurtbandes ausgelöst wird oder nicht. Wird die pyrotechnische Schaltvorrichtung nicht ausgelöst, wirkt das entsprechend hoch eingestellte Belastungsniveau, wie es für große Fahrzeuginsassen zweckmäßig ist, während bei Auslösung der Schaltvorrichtung die Einspannlänge des Torsionsstabes verändert und ein entsprechend niedrigeres Kraftbegrenzungsniveau eingestellt wird. Die diesbezügliche Steuerung der Auslösebereitschaft der pyrotechnischen Schaltvorrichtung erfolgt erfindungsgemäß dadurch, daß das entsprechend dem herrschenden Gurtbandauszug in eine Stellung gebrachte Schaltrad über eine an ihm ausgebildete Schaltkontur den Schaltstift eines Elektroschalters beaufschlagt, wobei der Elektroschalter die Auslösebereitschaft der pyrotechnischen Schaltvorrichtung in dem vorstehend erläuterten Sinne festlegt. Damit sind ein einfacher Aufbau und eine sichere Funktion des erfindungsgemäß ausgerüsteten Gurtaufrollers gewährleistet.

Im einzelnen ist zur Festlegung der Ansprechbereitschaft nach einem Ausführungsbeispiel der Erfindung vorgesehen, daß die Schaltkontur ausgehend von der bei voll aufgewickeltem Gurtband eingerichteten Stellung des Schaltrades einen ersten Abschnitt zur Anlage des in dieser Stellung eine Deaktivierung der Auslösung der pyrotechnischen Schaltvorrichtung bewirkenden Schaltstiftes aufweist und einen zweiten, an den ersten Abschnitt anschließenden und bei Drehung der Gurtwelle von dem Schaltstift überfahrenden Abschnitt aufweist, wobei in der am zweiten Abschnitt der Schaltkontur anliegenden Stellung des Schaltstiftes die pyrotechnische Schaltvorrichtung auslösbar ist, und daß an den zweiten Abschnitt ein dritter Abschnitt der Schaltkontur zur Anlage des Schaltstiftes anschließt und der Schaltstift in seiner an dem dritten Abschnitt der Schaltkontur anliegenden Stellung die Auslösung der pyrotechnischen Schaltvorrichtung deaktiviert. Mit der Aufteilung der Schaltkontur in drei Bereiche ist dem Umstand Rechnung getragen, daß bei vollständig abgelegtem Gurtband bzw. nur leicht ausgezogenem Gurtband eine Auslösung der pyrotechnischen Schaltvorrichtung nicht erfolgen soll. Wird das Gurtband mit einem Maß ausgezogen, welches bei kleineren Fahrzeuginsassen üblich ist, wird über die entsprechende Stellung des an der Schaltkontur anliegenden Schaltstiftes die Auslösebereitschaft der pyrotechnischen Schaltvorrichtung herbeigeführt, so daß bei.einem sensierten Unfall die Schaltvorrichtung anspricht. Wird das Gurtband von großen Fahrzeuginsassen weiter ausgezogen, bewegt sich der Schaltstift längs des dritten Abschnittes der Schaltkontur, und in dieser Stellung wird die Auslösebereitschaft der pyrotechnischen Schaltvorrichtung wiederum deaktiviert, so daß das hoch eingestellte Kraftbegrenzungsniveau Wirkung entfaltet.

In der Zeichnung ist ein Ausführungsbeispiel der Erfindung wiedergegeben, welches nachstehend beschrieben ist. Es zeigen:
- Fig. 1: die Systemseite eines Sicherheitsgurtaufrollers mit Ansteuerung der Kraftbegrenzungseinrichtung in Seitenansicht,
- Fig. 2: das Schaltrad als Bestandteil der Steuerung in einer vergrößerten Darstellung.

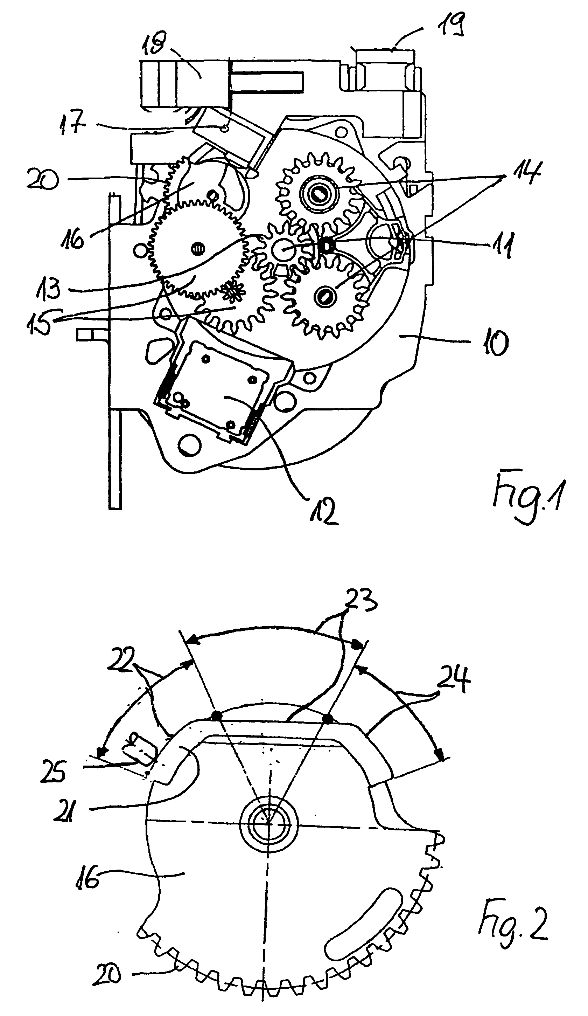

Ein an sich bekannter Gurtaufroller weist ein U-förmiges Gehäuse auf, in dessen seitlichen Gehäuseplatten, von denen in Figur 1 eine Gehäuseplatte 10 zu erkennen ist, eine Gurtwelle 11 gelagert ist. Wie sich aus Figur 1 ergibt, trägt die Gurtwelle 11 ein fest mit ihr verbundenes Wellenzahnrad 13. An der seitlichen Gehäuseplatte 10 ist ein fahrzeugsensitiver Sensor 12 angeordnet, dessen Funktion bei selbstsperrenden Gurtaufrollern aus dem Stand der Technik hinreichend bekannt ist.

An das außenverzahnte Wellenzahnrad 13 ist ein aus mehreren Zahnrädern bestehendes Getriebe 14 angeschlossen, mit welchem die ALR-ELR-Umschaltung eines Gurtaufrollers steuerbar ist, wobei auch diese Funktion für die Erläuterung der vorstehenden Erfindung ohne Belang ist und wahlweise an einem erfindungsgemäß ausgebildeten selbstsperrenden Gurtaufroller verwirklicht sein kann oder nicht.

Für die Verwirklichung der Erfindung wesentlich ist, daß an das Wellenzahnrad 13 ein aus zwei weiteren Zahnrädern bestehendes Untersetzungsgetriebe 15 angeschlossen ist, welches ein an der Gehäuseplatte 10 drehbar gelagertes Schaltrad 16 beaufschlagt. Hierzu ist das Schaltrad 16 über einen Teil seines Außenumfangs mit einer Außenverzahnung 20 versehen. Dem Schaltrad 16 ist ein Elektroschalter 17 zugeordnet, aus welchem ein in Figur 2 dargestellter Schaltstift 25 herausragt und an einer an dem Schaltrad 16 ausgebildeten Schaltkontur 21 geführt ist, wobei der Elektroschalter 17 mit einem Schaltgehäuse 18 für die pyrotechnisch betriebene Schaltvorrichtung zur Einstellung der Einspannlänge des die Kraftbegrenzungseinrichtung bildenden, im einzelnen nicht dargestellten Torsionsstabes gekoppelt ist. Der Gurtaufroller weist ferner einen Anschluß 19 für eine vom Fahrzeug herkommende Energiezuleitung auf.

Wie sich aus Figur 2 im einzelnen entnehmen läßt, ist die über einen Teil des Umfangs des Schaltrades 16 ausgebildete Schaltkontur 21 mit drei Bereichen ausgebildet, nämlich einem ersten Bereich 22, einem zweiten Bereich 23 und einem dritten Bereich 24, wobei die Bereiche 22, 23, 24 bei der Verschwenkung des Schaltrades 16 von dem daran anliegenden ortsfesten Schaltstift 25 überfahren werden. Die Zuordnung des Schaltrades 16 ist dabei derart betroffen, daß in dem ersten Bereich 22 eine Stellung des Schaltstiftes 25 bewirkt wird, in welcher der Elektroschalter 17 eine Deaktivierung der pyrotechnischen Schaltvorrichtung einstellt, so daß also im Falle eines sensierten Unfalles die pyrotechnische Schaltvorrichtung nicht ausgelöst wird. Dieser erste Bereich 22 entspricht dabei einer Stellung der Gurtwelle 11 mit voll oder nahezu voll aufgewickeltem Gurtband, also bei abgelegtem Sicherheitsgurt bzw. bei nur leicht ausgezogenem Gurtband, und in dieser Gurtauszugsstellung ist eine Auslösung der Schaltvorrichtung nicht erforderlich bzw. nicht gewünscht.

Wird das Gurtband von der Gurtwelle 11 mit einem Maß abgewickelt, welches der Anschnallänge des Gurtbandes bei kleineren Personen entspricht, so liegt der Schaltstift bei derartig abgewickeltem Gurtband an dem zweiten Bereich 23 der Schaltkontur 21 des Schaltrades 16 an, und in dieser Stellung bewirkt die Lage des Schaltstiftes 25 eine Aktivierung der Auslösebereitschaft dergestalt, daß bei einem sensierten Unfall nun die pyrotechnische Schaltvorrichtung ausgelöst und dadurch die Einspannsituation des Torsionsstabes derart verändert wird, daß sich ein niedrigeres Kraftbegrenzungsniveau ergibt.

Wird schließlich soviel Gurtband von der Gurtwelle 11 abgewickelt, wie dies der Anschnallänge bei großen Fahrzeuginsassen entspricht, gelangt der dritte Abschnitt 24 in Anlage an den Schaltstift, und hierdurch wird der Schaltstift in eine bei Anlage an dem ersten Abschnitt 22 entsprechende Stellung verbracht, in welcher die Auslösung der pyrotechnischen Schaltvorrichtung deaktiviert ist, so daß das hohe Kraftbegrenzungsniveau mangels eines Ansprechens der pyrotechnischen Schaltvorrichtung erhalten bleibt.

## Patentansprüche

1. Sicherheitsgurtaufroller mit einer in einem Gehäuse gelagerten Gurtwelle (11) als Träger eines darauf aufwickelbaren und davon abwickelbaren Gurtbandes, wobei der Gurtaufroller eine mehrstufig arbeitende Kraftbegrenzungseinrichtung mit einem Torsionsstab und einer den Torsionsstab in unterschiedlicher Einspannlänge mit der Gurtwelle (11) kuppelnden Schaltvorrichtung aufweist und wobei das Maß des von der Gurtwelle (11) abgewickelten Gurtbandes für die Schaltung der Kraftbegrenzungseinrichtung herangezogen ist, **dadurch gekennzeichnet, daß** ein zweistufiger Torsionsstab mit einer pyrotechnisch arbeitenden Schaltvorrichtung vorgesehen und ein über ein Untersetzungsgetriebe (15) an die Gurtwelle (11) angeschlossenes Schaltrad (16) angeordnet ist, wobei das Schaltrad (16) über einen Teil seines Umfangs eine Verzahnung (20) zum Eingriff des Untersetzungsgetriebes (15) und über einen weiteren Teil seines Umfangs eine gegen einen Schaltstift (25) eines an die Schaltvorrichtung für den Torsionsstab angeschlossenen Elektroschalters (17) anliegende Schaltkontur (21) aufweist und die Schaltkontur (21) mit einem die Zuschaltung oder Abschaltung der Schaltvorrichtung für den Torsionsstab bewirkenden Verlauf ausgebildet ist.

2. Sicherheitsgurtaufroller nach Anspruch 1, **dadurch gekennzeichnet, daß** die Schaltkontur (21) ausgehend von der bei voll aufgewickeltem Gurtband eingerichteten Stellung des Schaltrades (16) einen ersten Abschnitt (22) zur Anlage des in dieser Stellung eine Deaktivierung der Auslösung der pyrotechnischen Schaltvorrichtung bewirkenden Schaltstiftes (25) aufweist und einen zweiten, an den ersten Abschnitt (22) anschließenden und bei Drehung der Gurtwelle (11) von dem Schaltstift (25) überfahrenden Abschnitt (23) aufweist, wobei in der am zweiten Abschnitt (23) der Schaltkontur (21) anliegenden Stellung des Schaltstiftes (25) die pyrotechnische Schaltvorrichtung auslösbar ist, und daß an den zweiten Abschnitt (23) ein dritter Abschnitt (24) der Schaltkontur (21) zur Anlage des Schaltstiftes (25) anschließt und der Schaltstift (25) in seiner an dem dritten Abschnitt (24) der Schaltkontur (21) anliegenden Stellung die Auslösung der pyrotechnischen Schaltvorrichtung deaktiviert.

## Claims

1. Safety belt roll-up mechanism having a belt shaft (11) that is mounted In a housing and serves as a carrier for a belt strap that can be wound onto and unwound from the belt shaft, whereby the belt roll-up mechanism is provided with a force limitation device that operates in a multi-stage manner and has a torque rod and a switching device that couples the torque rod, in various clamping lengths, with the belt shaft (11), whereby the extent of the belt strap unwound from the belt shaft (11) is used for the switching of the force limitation device, **characterized in that** a two-stage torque rod having a pyrotechnically operating switching device is provided, and a ratchet wheel (16) is connected to the belt shaft (11) via a reduction gear mechanism (15), whereby the ratchet wheel (16) is provided over a portion of its periphery with a toothing (20) for engagement with the reduction gear mechanism (15) and is provided over a further portion of its periphery with a switching contour (21) that rests against a contact pin (25) of an electric switch (17) that is connected to the switching device for the torque rod, and the switching contour (21) has a profile that effects a connection or disconnection of the switching device for the torque rod.

2. Safety belt roll-up mechanism according to claim 1, **characterized in that** the switching contour (21), proceeding from the position of the ratchet wheel (16) that is provided when the belt strap is fully wound up, has a first portion (22) for a contact of the contact pin (25) that in this position effects a deactivation of the triggering of the pyrotechnical switching device, and has a second portion (23) that adjoins the first portion (22) and that, upon rotation of the belt shaft (11), is traveled over by the contact pin (25), whereby in the position of the contact pin (25) where it rests against the second portion (23) of the switching contour (21), the pyrotechnical switching device can be triggered, and **in that** a third portion (24) adjoins the second portion (23) and serves for the contact of the contact pin (25), and the contact pin (25), in its position where it rests against the third portion (24) of the switching contour (21), deactivates the triggering of the pyrotechnical switching device.

## Revendications

1. Enrouleur de ceinture de sécurité comportant un arbre à courroie (11) fixé dans un logement faisant office de support d'une courroie enroulable et déroulable sur ce dernier, l'enrouleur de ceinture présentant un dispositif de limitation de force fonctionnant sur plusieurs étages, avec une barre de torsion et un dispositif de commutation provoquant le couplage de la barre de torsion avec l'arbre à courroie (11) à différentes longueurs de serrage et la mesure de la courroie déroulée de l'arbre à courroie (11) servant de référence pour la commutation du dispositif de limitation de force, **caractérisé en ce qu'**il est prévu une barre de torsion à deux étages avec un dispositif de commutation fonctionnant de manière pyrotechnique et **en ce qu'**une roue de commande (16) raccordée à l'arbre à courroie (11) est disposée par le biais d'un réducteur (15), la roue de commande (16) présentant, sur une partie de sa circonférence, une denture (20) pour l'engagement du réducteur (15), et, sur une autre partie de sa circonférence, un contour de commutation (21) en appui contre une tige de commutation (25) d'un interrupteur électrique (17) raccordé au dispositif de commutation pour la tige de torsion, et le contour de commutation (21) étant conformé selon un tracé provoquant l'activation ou la désactivation du dispositif de commutation pour la tige de torsion.

2. Enrouleur de ceinture de sécurité selon la revendication 1 **caractérisé en ce que** le contour de commutation (21), partant de la position de la roue de commande (16) où la courroie est totalement enroulée, présente un premier tronçon (22) permettant l'appui de la tige de commutation (25) entraînant dans cette position une désactivation du déclenchement du dispositif de commutation pyrotechnique, et un second tronçon (23) qui prolonge le premier tronçon (22) et qui est parcouru par la tige de commutation (25) lors de la rotation de l'arbre à courroie (11), le dispositif de commutation pyrotechnique pouvant être déclenché dans la position de la tige de commutation (25) où celle-ci est en appui sur le second tronçon (23) du contour de commutation (21), et **en ce que** le second tronçon (23) est poursuivi par un troisième tronçon (24) du contour de commutation (21) permettant un appui de la tige de commutation (25), et **en ce que** la tige de commutation (25) désactive, dans sa position en appui contre le troisième tronçon (24) du contour de commutation (21), le déclenchement du dispositif de commutation pyrotechnique.
